(19) Europäisches Patentamt
European Patent Office
Office européen des brevets

(11) **EP 2 359 343 B1**

(12) **EUROPEAN PATENT SPECIFICATION**

(45) Date of publication and mention
of the grant of the patent:
**24.04.2013 Bulletin 2013/17**

(21) Application number: **09827822.9**

(22) Date of filing: **10.11.2009**

(51) Int Cl.:
***G07C 5/08*** *(2006.01)*          *G09B 9/052* *(2006.01)*

(86) International application number:
**PCT/SE2009/051280**

(87) International publication number:
**WO 2010/059109 (27.05.2010 Gazette 2010/21)**

(54) **SLOPE FEEDBACK DEVICE**

NEIGUNGSFEEDBACKVORRICHTUNG

DISPOSITIF DE RETOUR D'INFORMATIONS CONCERNANT UNE PENTE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **21.11.2008 SE 0850085**

(43) Date of publication of application:
**24.08.2011 Bulletin 2011/34**

(73) Proprietor: **Scania CV AB (PUBL)**
**151 87 Södertälje (SE)**

(72) Inventors:
• **ANDERSSON, Jonny**
**S-151 68 Södertälje (SE)**
• **BREDBERG, Linus**
**S-151 46 Södertälje (SE)**

(56) References cited:
**WO-A1-2007/139491          WO-A1-2007/139491
WO-A1-2007/139494          WO-A1-2008/094114
US-B1- 6 374 173**

**Description**

Field of the invention

The present invention relates to a slope feedback device for use in a vehicle according to the preamble of the independent claim.

Background of the invention

When driving heavy vehicles, such as trucks, buses and the like, the vehicle economy has in time gained a greater effect on the profitability in the business in which the vehicle is used. Except for the acquiring cost of the vehicle, the largest items of expenditure for a vehicle consist of fuel costs and service costs. These costs are often connected, i.e. a vehicle that is heavily used both consumes more fuel and is exposed to greater wear with increasing service costs as a consequence. It is thus difficult to establish how great part of the vehicle fuel consumption and wear that for example is derived from incautious driving, and how great amount that is derived from unfavorable traffic surroundings, such as extremely undulated ground and/or urban environment with heavy traffic.

In addition, new law demands dictate that drivers of heavy vehicles with certain intervals have to go through education in inter alia "ECO-driving".

When a driver conveys a heavy vehicle there is a plurality of measures a driver can take to reduce the fuel consumption. One basic idea in fuel-saving driving is to use the kinetic energy of the vehicle as optimally as possible. A driver should e.g. not give gas over a hill to shortly afterwards use the brakes in the following downhill slope to not exceed speed limitations. In this case some of the energy, in the form of injected fuel, that is used before the hill top is wasted because the energy is consumed during braking in the downhill slope. The driver should instead release the gas in time and roll over the hill top without giving gas. This way of driving is often taught in courses in "ECO-driving".

This solution gives continuous feedback to the driver that hopefully brings about that the driver improves, or at least, maintains a good economical and environmentally friendly driving technique.

It is however hard to establish when it is time to release the gas to drive in the most fuel-saving way over a hill. The international application WO/2007/139491 discloses a device for determining a fuel consumption behaviour of vehicle's driver. The device may determine if an uphill slope transitions to a downhill slope, and compare motor take offs before and after the top of the hill to evaluate the capacity of the driver to take advantage of the forthcoming downhill slope for acceleration of the vehicle. The evaluation of the capacity of the driver is thus dependent of a detection of the hill top.

The European Patent Application no. 1811481 discloses a method and system for monitoring and analyzing a driver style. A driver profile is generated based upon the location of the vehicle and vehicle associated parameters. Scores depending on how well the driver has driven may be given. However, the system fails in analyzing more complicated situations and may only give general constructive feedback to the driver.

The object of the present invention is to provide an improved way of establishing if a driver conveys a vehicle in a fuel-saving way when driving in slopes. A further aim of the invention is to encourage and guide the driver to convey the vehicle more economically.

Summary of the invention

The above-mentioned object is achieved by a slope feedback device according to the present invention, which determines and presents feedback to a driver of a vehicle, including a slope determining unit adapted to determine a slope profile of a slope passed by the vehicle, based upon output signals from a slope profile sensing means and driving sensing means to continuously sense and calculate a driver's driving activity during passage of a slope. The driving sensing means in addition continuously calculates a driving resistance force $F_{res}$ and a specific driving resistance point $F_{res \leq 0}$ is determined, where the driving resistance force $F_{res}$ is less or equal to zero. The slope determining unit is further adapted to calculate for each $F_{res \leq 0}$ a slope balance point $P_{bal}$ defined as the theoretical point where the gas should be released in order to balance consumed energy, by the vehicle, before said $F_{res \leq 0}$ and gained energy, by the vehicle, after said point, and to determine an optimal driving activity in dependence of $P_{bal}$. The device further comprises a driving ability calculating means adapted to match the driving activity to the determined slope profile, and to generate a grade in dependence of how well the driving activity coincides with the optimal driving activity. The grade is further presented to the driver of the vehicle

This invention accordingly concerns a slope feedback device that, in real time, evaluates and gives constructive feedback to the driver regarding how he/she has managed the last passed hill/downhill slope. With a calculation of a balance point it is possible to take into consideration e.g. high velocity slopes and hill types where the shape of the hill does not follow the normal pattern.

Fuel saving driving also teaches that accelerations should happen before uphill slopes, and if possible, in downhill slopes. The present invention provides a tool to evaluate and grade a driver's actions during a plurality of different kinds of hills and slopes, dependent on the special characteristics of the hills and slopes.

Preferred embodiments are set forth in the dependent claims.

Short description of the appended drawings

Figure 1 illustrates a control system for a vehicle where the present invention can be utilized.

Figure 2 illustrates an exemplary device according to the present invention.

Figure 3-5 illustrates how different points and values are calculated according to the present invention.

Detailed description of preferred embodiments of the invention

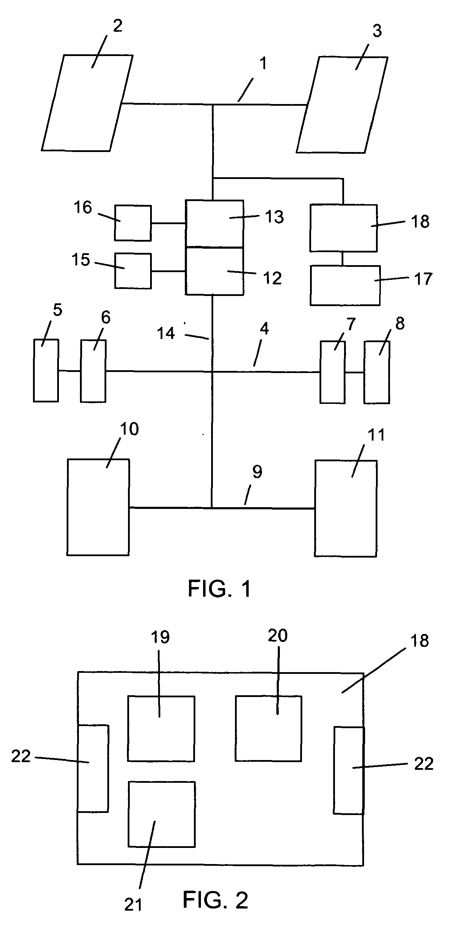

In fig. 1 is schematically illustrated a control system for a vehicle with which the present invention may be utilized. The vehicle comprises a front shaft 1 with steering wheels 2, 3, a rear drive shaft 4 with driving wheels 5-8, and may also have a rear shaft 9 with wheels 10 and 11. Furthermore, the vehicle contains an engine 13 connected to a gear box 12, which drives the drive shaft 4 by means of an output shaft 14 from the gear box. Gear box 12 and motor 13 are controlled by control units 15, 16, respectively, which are controlled by a main control unit 17. The Engine Management System (EMS) 16 controls the motor functions of the vehicle, which, for example, can consist of fuel injection and motor brake. The control is based on a number of input signals, which can consist of signals from (not shown) throttle controls (the position of the accelerator pedal), speed sensor and brake management system. The Gearbox Management System (GMS) 15 controls the gear functions, wherein, when using an automatic gearbox, the gear shifting can be controlled based on an input signal from speed sensors, in manual gear shifting the shifting can be controlled from an input signal from a gear selector (gear shift lever). Furthermore, the vehicle contains a Brake Management System (BMS) with a break control unit 17, which controls the brake functions of the vehicle, such as automatic calculation of the load so that a given pedal position always can result in the same brake effect regardless of the load. The brake control unit controls the various brake systems of the vehicle, e.g. retarder and other auxiliary brake systems, exhaust brake and service brake on the basis of commands from the driver, and sends control signals to system modules (not shown) dispersed on the chassis, where electrical control signals are used, e.g. to adjust brake pressure.

The above described control units constitute mere examples of what can exist in a vehicle. As is appreciated by a person skilled in the art, two or more of the above described control units can, of course, be integrated in one single control unit.

It should also be pointed out that the present invention is in particular applicable to heavier vehicles, but may also be used in any motor vehicle, e.g. private cars, tractors etc.

The present invention relates to a slope feedback device 18 for determining and presenting feedback to a driver of a vehicle, and is illustrated in greater detail in fig. 2. According to one embodiment, a vehicle comprises a slope feedback device 18 according to the invention. The slope feedback device 18 may thus be a part of the vehicle, or may, according to another embodiment, be a device placed at a distance. The slope feedback device 18 includes a slope determining unit 19 adapted to determine a slope profile of a slope passed by the vehicle, based upon output signals from a slope profile sensing means. The slope profile sensing means may sense or receive various signals such as motor torque, motor friction, total gear ratio, acceleration, rotational speed, lateral speed, etc. from sensors distributed in the vehicle, and receiving means 22 in the slope feedback system 18 may receive the relevant signals regarding surrounding parameters and signals from internal sensors in the vehicle, i.e. speed sensors, torque sensors, gear sensors, etc. used in the slope feedback device 18. Some properties such as driving wheel radiuses and vehicle mass are also used in the slope feedback device 18, and may be predetermined or estimated. The slope profile sensing means may also receive signals from a GPS or other kind of external sensors, via the receiving means 18.

Based on the sensed or received signals, the slope determining unit 19 calculates a slope profile of the passed slope. The slope profile may be determined based upon a driving resistance force, which is a total sum of the resultant of the outer forces rolling resistance, air resistance and gravity acting on the vehicle. According to one embodiment, the driving resistance force $F_{res}$ is calculated dependent on various influencing parameters, e.g. rolling resistance, air resistance and gravity. With known models for rolling resistance as well as air resistance, the contribution of the gravity to the driving resistance can be estimated from the calculated driving resistance, i.e. the slope of the road can be described, whereby the actual inclination of the roadway in relation to the horizontal plane can be determined at each given point in time. By studying historical variations in the inclination (slope), the undulation of the road can also be determined and divided in different slope segments. For example, it can be determined if an uphill slope is followed by a downhill slope. This can be performed with either distance or time as a basis of measurement to assess the undulation, wherein the distance easily can be calculated by means of the speed of the vehicle, or the radius of the driving wheels in combination with a rotation sensor.

Accordingly, the slope determining unit 19 can be used to obtain a good representation of the slope of the road on which the vehicle is traveling. Other ways than driving resistance can be used to calculate the slope of the ground of the vehicle, for example, an inclinometer, accelerometer, barometer, or a navigation system, such as GPS. An additional example of how the inclination can be determined is given by the Swedish Patent Application 0600370-1, which describes a device for estimating the inclination of a ground on which a vehicle is traveling. The disclosed device includes means for generating a weighted estimation of the inclination based on parameter values from at least two sources, wherein the device includes means for determining the respective impact of the parameter values on the weighted estimation of the inclination.

The slope feedback device 18 further includes a driving sensing means to continuously sense and calculate a driver's driving activity during passage of a slope, i.e. sense when a braking measure or gas measure is started and/or finished, velocity, acceleration, etc. It is then possible to establish, in relation to the determined slope profile, at which position on the slope the driver made different driver's measures, e.g. where the driver gave gas, or braked.

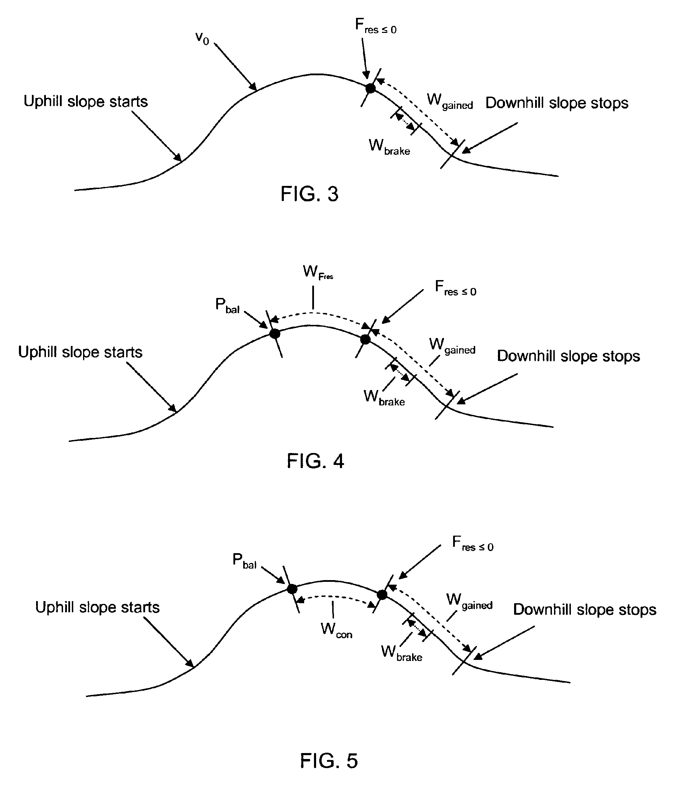

To be able to give feedback about the driver's driving ability, the driving sensing means continuously calculates the above described driving resistance force $F_{res}$ and determines a specific driving resistance point $F_{res \leq 0}$, where the driving resistance force $F_{res}$ becomes less or equal to zero. This is the point in the slope where the vehicle starts to be pushed down as an effect of the inclination of the slope, and is illustrated in figs. 3-5.

The slope determining unit 19 is adapted to calculate for each $F_{res \leq 0}$, a slope balance point $P_{bal}$, defined as the theoretical point where the gas should be released in order to balance consumed energy, by the vehicle, before the $F_{res. \leq 0}$ and gained energy, by the vehicle, after said point. The balance point is pointed out in fig. 4-5. The balance point $P_{bal}$ corresponds to the theoretical point where the braking energy $W_{Fres}$ from the driving resistance corresponds to the energy $W_{gained}$ that is regained after a certain time in the downhill slope. $W_{Fres}$ is thus the total energy coming from the driving resistance force between the point $P_{bal}$ and the point $F_{res \leq 0}$. According to one embodiment, the slope balance point $P_{bal}$ is calculated as the point where the brake energy of the vehicle from the driving resistance force $F_{res}$, before the point $F_{res \leq 0}$, is equal to the gained energy $W_{gained}$ by the vehicle in the slope after the point $F_{res \leq 0}$. An optimal driving activity is determined in dependence of $P_{bal}$, with other words - if the driver releases the gas in the slope balance point, the vehicle has regained its initial speed at a reasonable position in the downhill slope without braking (the driver shall not have to "edge along" in minimal speed over the hill to totally avoid a braking). All energy that is supplied in the form of fuel after this point is thus classified as waste as the driver has to brake away some of the regained energy to not obtain to high of a speed. The $W_{gained}$ is calculated as

$$W_{gained} = \int F_{res}(t) \cdot v(t), \quad \textit{(where } F_{res}\textit{<0)} \qquad (1)$$

i.e. the accumulated driving resistance after the point $F_{res \leq 0}$ until the downhill slope ends. $v(t)$ is the velocity of the vehicle. The point where the downhill slope ends may be chosen as the point where $F_{res}$ is below a certain value, or when the inclination of the slope falls below a certain angle. In the same way the point where a slope begins may be determined as the point where the $F_{res}$ is above a certain value, or when the inclination of the slope is above a certain angle.

As the driving resistance and velocity of the vehicle are known also before the point $F_{res \leq 0}$, it is possible to calculate a point where the accumulated driving resistance ($W_{Fres}$) is equal to the $W_{gained}$. The $W_{Fres}$ is calculated as

$$W_{Fres} = \int F_{res}(t) \cdot v(t) \qquad \textit{(where } F_{res} \geq 0\textit{)} \qquad (2)$$

i.e. the accumulated driving resistance between the slop balance point $P_{bal}$ and the point $F_{res \leq 0}$.

The slope feedback device 18 according to the invention further comprises a driving ability calculating means adapted to match the driving activity to the determined slope profile, and to generate a grade in dependence of how well the driving activity coincides with the optimal driving activity. Accordingly, the driver can be graded dependent on how well he/she has been driving over the slope.

The consumed energy by the vehicle, $W_{con}$, may now be calculated as:

$$W_{con} = \int P_{engine}(t) \quad \left( = \int \tau \cdot \omega(t) \right) \tag{3}$$

i.e. the consumed energy by the vehicle between the balance point $P_{bal}$ and the point $F_{res \leq 0}$. If the driver gives gas after the balance point, $W_{con}$ is positive, otherwise zero or negative. $P_{engine}(t)$ is the net power, i.e. the power of the engine minus losses.

The grade is advantageously presented to the driver of the vehicle. The slope feedback system thus comprises means for transmitting the grade value to a presentation means in the vehicle. Accordingly, the driver receives immediate feedback about his or her driving manner, and may improve his/her way of conveying the vehicle. The grade may be presented on a presentation means in the driver's cabin, or may be presented by sound means. The grade may later be transformed to 0-100% on the presentation means, e.g. a display, for the driver. The grades may also be continuously transmitted to a remote terminal, where e.g. a fleet owner may compare grades between different drivers. The vehicle can also be arranged to transmit data, e.g. wirelessly, to a remote slope feedback terminal, whereby the described evaluation and grading can be made, instead of in the vehicle.

According to one embodiment, the driving ability calculating means classifies the determined slope profile into one of a plurality of slope profile categories, based upon classification rules dependent on the appearance/certain characteristics of the determined slope profile and the velocity of the vehicle.

Preferably, hills and downhill slopes are classified into at least one of a plurality of different slope profile categories. They are here exemplified as:

    1. Braking in downhill slope
    2. Uphill preparation
    3. Normal hilltop, and
    4. High speed downhill slope.

The driving ability calculating means thus compares the determined slope profile and other influencing variables and driver's measures, such as velocity and weight of the vehicle and giving gas or braking, with classification rules to classify the determined slope profile into a certain slope profile category, in this example in any of the categories 1 to 4 above. The classification rules may e.g. include thresholds for the velocity, if a driver gives gas or brakes in a slope, the weight of the vehicle, if the detected slope profile includes an uphill slope followed by a downhill slope etc. Based on the classification rules, a category for the passed hill is chosen.

Before a determined slope profile has been classified, a check is advantageously made if certain initial conditions for making a classification are attained. According to one embodiment, certain initial rules determine if a classification of the determined slope profile is made or not. The rules takes e.g. initial velocity $v_0$ into consideration, and also striking reduction of the velocity in a slope, as this behaviour may be interpreted as if an unforeseen bend or velocity limitation is found behind the hill. The evaluation is also interrupted if the driver brakes to maintain the velocity and a sharp bend appear. The initial velocity $v_0$ is according to one embodiment determined as the maximum value of the velocity during the last 15 seconds before the downhill slope starts pushing the vehicle, i.e. the point $F_{res \leq 0}$. Accordingly, a plurality of special cases may be discriminated and not classified and graded to improve the feedback to and grading of the driver.

According to one embodiment, category 1, 2 and 4 as described above, are only evaluated and graded when the initial velocity $v_0$ exceeds a minimum threshold. Thus, no grade is given to the driver if the vehicle does not have a certain speed, as the grade given to the driver then might be unfavourable because of circumstances that the driver may not be able to influence. Advantageously, the plurality of slope profile categories has a certain priority. Thus, in the cases where many categories are detected at the same time, they are prioritized in the above mentioned order (category 1 first, followed by 2, 3 and 4).

In one embodiment according to the invention, the grade of the driving activity is determined based upon certain category rules for the determined slope profile category. Thus, when a slope profile has been categorized in a certain category, the grade of the driving activity is evaluated and graded dependent on the certain rules for the certain category.

According to the category rules in one category (here category 1 - Braking in downhill slope) according to one embodiment, the driving activity is calculated as the energy consumed $W_{con}$ by the vehicle between the slope balance point $P_{bal}$ and the point $F_{res \leq 0}$, and if the driver brakes in the downhill slope, a brake energy $W_{brake}$ being the energy braked away by the vehicle in the downhill slope. According to one embodiment, a grade is determined based upon the relationship between the energy consumed $W_{con}$ by the vehicle, and the minimum value of gained energy $W_{gained}$ by the vehicle in the slope and the brake energy $W_{brake}$.

In this category, a grade value is calculated as:

$$V_{grade} = \frac{\min(W_{brake}, W_{gained})}{W_{con}} \cdot K, \qquad (4)$$

where K, is a value compensating for errors in the calculations. The grade value is transformed to a grade between e.g. 0 and 10.

If the grade is low enough, a recommendation is shown to the driver where the driver is encouraged to let go of the gas earlier before next downhill slope. If the velocity is dramatically lowered in the downhill slope, no grading is made (may be interpret as if the driver introduces a speed restriction, crossing or corresponding). A grade is also not given when the driver e.g. brakes in the downhill slope before a sharp bend.

According to the category rules in a further category (here category 2 - Uphill preparation) according to one embodiment, a high grade is given to the driver if the driver prepares for a coming uphill slope. Thus, if the driver actively considerably increases the velocity in a downhill slope or on a flat road, before next uphill slope, a top grade is given to the driver in the Uphill preparation-category. This increase in velocity that is demanded to get a grade in this category depends on certain thresholds, such as thresholds for initial velocity and vehicle weight, with the demand for a lowest weight and a lowest initial speed, and thresholds for how far away the coming uphill slope is. An Uphill preparation-grade is not given if the driver shortly before has been given a low grade in another category (e.g. if the driver has given gas over a previous hill).

According to the category rules in a third category (here category 3 - Normal hilltop) according to one embodiment, the grade is determined based upon the relationship between the energy consumed $W_{con}$ by the vehicle, and gained energy $W_{gained}$ by the vehicle in the slope. A grade is here given depending on the relationship between energy that is obtained in the downhill slope and the used energy after the balance point. In this category, a grade value is calculated as:

$$V_{grade} = \frac{W_{gained}}{W_{con}} \cdot K, \qquad (5)$$

where K, is a value compensating for errors in the calculations. The grade value is transformed to a grade between e.g. 0 and 10.

In cases when the hill top is not perfect rounded, a grade is given in this category if an uphill slope is followed by a downhill slope in a certain time. Grades are not given if the velocity decrease on the hill top is too big, or if the obtained velocity increase in the downhill slope is too small. If the driver takes the hill in a disadvantageous way, feedback is shown to the driver that encourages the driver to let go of the gas earlier before next hill top. In a corresponding way encouraging feedback is shown to the driver if the driver has driven in an exemplary way.

According to the category rules in a fourth category (here category 4 - High speed downhill slope) according to one embodiment, the balance point is determined with the prerequisite that $W_{gained}$ is calculated in dependence of a certain maximum speed restriction. The balance point for high velocity slopes is the point where the driver should release the gas to only just touch the velocity limit (normally set to 90 km/h) in the coming downhill slope. The grade value is then determined based upon the relationship between the energy consumed $W_{con}$ by the vehicle, and the energy gained $W_{gained}$ by a vehicle above a certain speed threshold. $W_{Fres}$ is here determined as:

$$W_{Fres} = \left(\frac{v - v_{\lim}}{v - v_0}\right) \cdot W_{gained}, \qquad (6)$$

where v is the maximum velocity of the vehicle in the downhill slope, $v_{\lim}$ the speed limit and $v_0$ the initial velocity of the vehicle. In this category, a grade value is calculated as:

$$V_{grade} = \frac{v - v_{\lim}}{v - v_0} \cdot \frac{W_{gained}}{W_{con}} \cdot K , \qquad (7)$$

where K, is a value compensating for errors in the calculations. The grade value is transformed to a grade between e.g. 0 and 10. A grade is thus given in dependence of the energy of the velocity above the speed limit, $v_{\lim}$, and is given only if there is a possibility to exceed the speed limit if the driver not releases the gas in time. The $V_{\lim}$ is a parameter that can be varied according to different requirements from e.g. haulers. The grade is calculated from that the relationship between the energy gained from the velocity above the speed limitation (e.g. if $v_{\lim}$ is 90 km/h, then 95-90 = 5 km/h, i.e. the kinetic energy that 5 km/h is contributing with during the period) and the energy that is added after the balance point. In the cases where no energy is added, the energy gained from the velocity above the speed limitation is of course zero. In these cases the highest grade is given. At low grades a recommendation is given that encourages the driver to release the gas earlier before next downhill slope. Even positive recommendations are given in the cases the driver has been driving in an advantageous way.

Highest grade may be given even if the velocity limit is exceeded. This thus happens only if the driver has not accelerated after the calculated balance point (this may typically happen at a long downhill slope).

Advantageously, the grade is determined in dependence of the weight of the vehicle. Accordingly, the weight of the vehicle regulates how close to the velocity limit the driver has to be. The lower weight the vehicle has, the closer to the speed limit the vehicle has to be driven to get a grade in this category.

The driver is expected to only anticipate the hill top a certain time in advance. According to one embodiment, the balance point is determined within a predetermined maximal distance from the $F_{res \leq 0}$. Thus, a limitation on the balance point is set as it is not possible to place the balance point unlimited way backwards. The driver has to give gas long enough to be able to convey the vehicle until the point $F_{res \leq 0}$ is reached, where the downhill pushes the vehicle. The driver shall also not be demanded to foresee a situation in the concerned areas that are more than a predetermined time horizon away.

In one embodiment, the slope profile sensing means comprises one or many from the group: accelerometer, barometer, navigation system such as GPS. Thus, there are numerous ways available to establish a slope profile.

Preferably, when an adaptive cruise control is activated in the vehicle and regulates against a target, then the slope feedback device 18 according to the invention is deactivated, as outer traffic aspects makes optimal slope behaviour impossible. Accordingly the slope feedback device 18 is deactivated when the driver is equipped with "ECO-cruiser" and this is active. To avoid confusion when the usual cruise control is used, it is only possible to get high grades by deactivating the cruise control before the hill top (interpreted as a release of the gas). After the hill, the cruise control may be "resumed" and grades may be given as usual.

The slope feedback system 18 includes necessary hardware and software computer products and programs to implement the present invention.

The present invention is not limited to the above described preferred embodiments. Various alternatives, modifications and equivalents may be used. Therefore, the above embodiments should not be taken as limiting the scope of the invention, which is defined by the appending claims.

**Claims**

1. Slope feedback device (18) for determining and presenting feedback to a driver of a vehicle, comprising
a slope determining unit (19) adapted to determine a slope profile of a slope passed by the vehicle, based upon output signals from a slope profile sensing means,
a driving sensing means (20) to continuously sense and calculate a driver's driving activity during passage of a slope, said driving sensing means (20) in addition continuously calculates a driving resistance force $F_{res}$ and that a specific driving resistance point $F_{res \leq 0}$ is determined, where the driving resistance force $F_{res}$ is less or equal to zero,
the device further comprises a driving ability calculating means (21) adapted to match the driving activity to said determined slope profile, and to generate a grade in dependence of how well the driving activity coincides with said optimal driving activity, and
that said grade is presented to the driver of the vehicle,
**characterized in that** said slope determining unit is adapted to calculate for each $F_{res \leq 0}$ a slope balance point $P_{bal}$ defined as the theoretical point where the gas should be released in order to balance consumed energy, by the vehicle, before said $F_{res \leq 0}$ and gained energy, by the vehicle, after said point, and to determine an optimal driving activity in dependence of $P_{bal}$.

**2.** Device according to claim 1, wherein said driving ability calculating means classifies said determined slope profile into one of a plurality of slope profile categories, based upon classification rules dependent on the appearance/ certain characteristics of the determined slope profile and the velocity of the vehicle, and that said grade of the driving activity is determined based upon certain category rules for the determined slope profile category.

**3.** Device according to claim 1 or 2, wherein certain initial rules determines if a classification of the determined slope profile is made or not, preferably dependent on initial velocity $v_0$, striking reduction of the velocity, braking before a sharp bend, etc.

**4.** Device according to claim 2, wherein said plurality of slope profile categories has a certain priority.

**5.** Device according to claim 2, wherein said driving activity is calculated as the energy consumed $W_{con}$ by the vehicle between the slope balance point $P_{bal}$ and the point $F_{res \le 0}$, and if the driver brakes in the downhill slope, a brake energy $W_{brake}$ being the energy braked away by the vehicle in the downhill slope.

**6.** Device according to claim 1, wherein said slope balance point $P_{bal}$ is calculated as the point where the brake energy of the vehicle from the driving resistance force $F_{res}$, before the point $F_{res \le 0}$, is equal to the gained energy $W_{gained}$ by the vehicle in the slope after the point $F_{res \le 0}$.

**7.** Device according to claim 5, wherein said grade is determined based upon the relationship between the energy consumed $W_{con}$ by the vehicle, and gained energy $W_{gained}$ by the vehicle in the slope.

**8.** Device according to claim 5, wherein said grade is determined based upon the relationship between the energy consumed $W_{con}$ by the vehicle, and the minimum value of gained energy $W_{gained}$ by the vehicle in the slope and the brake energy $W_{brake}$.

**9.** Device according to claim 5, wherein said balance point is determined with the prerequisite that $W_{gained}$ is calculated in dependence of a certain maximum speed restriction.

**10.** Device according to claim 9, wherein said ratio value is determined based upon the relationship between the energy consumed $W_{con}$ by the vehicle, and the energy gained $W_{gained}$ by a vehicle above a certain speed threshold.

**11.** Device according to any of the preceding claims, wherein said grade is determined in dependence of the weight of the vehicle.

**12.** Device according to any of the preceding claims, wherein said balance point is determined within a predetermined maximal distance from said $F_{res \le 0}$.

**13.** Device according to claim 1, wherein said slope profile sensing means comprises one or many from the group: accelerometer, barometer, navigation system such as GPS.

**14.** Device according to claim 1, wherein said driving resistance force $F_{res}$ is calculated dependent on various influencing parameters, e.g. rolling resistance, air resistance and gravity.

**15.** Vehicle comprising a slope feedback device (18) according to any of the preceding claims 1-14.

**Patentansprüche**

**1.** Neigungsrückkopplungsvorrichtung (18) zum Ermitteln einer Rückkopplung und zum Anzeigen der Rückkopplung gegenüber einem Fahrer eines Fahrzeugs, umfassend
eine Neigungsermittlungseinheit (19), die dazu ausgestaltet ist, um ein Neigungsprofil einer von dem Fahrzeug befahrenen Neigung basierend auf Ausgangssignalen von einem Neigungsprofilmessmittel zu ermitteln, ein Fahrmessmittel (20) zum kontinuierlichen Messen und Berechnen einer Fahrtätigkeit des Fahrers während des Befahrens einer Neigung,
wobei das Fahrmessmittel (20) ferner kontinuierlich eine Fahrwiderstandskraft $F_{res}$ berechnet und ein spezifischer Fahrwiderstandspunkt $F_{res \le 0}$ ermittelt wird, an dem die Fahrwiderstandskraft $F_{res}$ kleiner oder gleich null ist,
wobei die Vorrichtung ferner ein Fahrkönnenberechnungsmittel (21) umfasst, das dazu ausgestaltet ist, um die Fahrtätigkeit mit dem ermittelten Neigungsprofil zu vergleichen und um eine Einstufung in Abhängigkeit davon, in wie weit die Fahrtätigkeit mit einer optimalen Fahrtätigkeit übereinstimmt, zu erzeugen, und wobei die Einstufung dem Fahrer des Fahrzeugs präsentiert wird, **dadurch gekennzeichnet, dass** die Neigungsermittlungseinheit dazu ausgestaltet ist, um für jeden $F_{res\leq0}$ einen Neigungsausgleichspunkt $P_{bal}$ zu berechnen, der als der theoretische Punkt, an dem ein Beschleuniger freigegeben werden sollte, um die von dem Fahrzeug vor dem $F_{res\leq0}$ verbrauchte Energie mit der von dem Fahrzeug nach diesem Punkt aufgenommene Energie abzugleichen, und um die optimale Fahrtätigkeit in Abhängigkeit von $P_{bal}$ zu ermitteln.

2. Vorrichtung nach Anspruch 1, wobei das Fahrkönnenberechnungsmittel das ermittelte Neigungsprofil in eine von mehreren Neigungsprofilkategorien basierend auf Klassifizierungsregeln klassifiziert, die von der Erscheinung / bestimmten Eigenschaften des ermittelten Neigungsprofils und der Geschwindigkeit des Fahrzeugs abhängig sind, und die Einstufung der Fahrtätigkeit basierend auf bestimmten Kategorieregeln für die ermittelte Neigungsprofilkategorie ermittelt wird.

3. Vorrichtung nach Anspruch 1 oder 2, wobei bestimmte Ausgangsregeln ermitteln, ob eine Klassifizierung des ermittelten Neigungsprofils vorgenommen wird oder nicht, vorzugsweise in Abhängigkeit von der Ausgangsgeschwindigkeit $v_0$, einer auffälligen Verringerung der Geschwindigkeit, einem Bremsen vor einer scharfen Kurve, etc.

4. Vorrichtung nach Anspruch 2, wobei die Neigungsprofilkategorien bestimmte Prioritäten besitzen.

5. Vorrichtung nach Anspruch 2, wobei die Fahrtätigkeit als die vom Fahrzeug zwischen dem Neigungsausgleichspunkt $P_{bal}$ und dem Punkt $F_{res\leq0}$ verbrauchte Energie $W_{con}$ und, falls der Fahrer an dem Gefälle bremst, eine Bremsenergie $W_{brake}$, die die vom Fahrzeug am Gefälle weggebremste Energie darstellt, berechnet wird.

6. Vorrichtung nach Anspruch 1, wobei der Neigungsausgleichspunkt $P_{bal}$ als der Punkt berechnet wird, an dem die von der Fahrwiderstandskraft $F_{res}$ ausgehende Bremsenergie des Fahrzeugs vor dem Punkt $F_{res\leq0}$ gleich der vom Fahrzeug an der Neigung nach dem Punkt $F_{res\leq0}$ aufgenommenen Energie $W_{gained}$ Ist.

7. Vorrichtung nach Anspruch 5, wobei die Note basierend auf dem Verhältnis zwischen der vom Fahrzeug verbrauchten Energie $W_{con}$ und der vom Fahrzeug an der Neigung aufgenommenen Energie $W_{gained}$ ermittelt wird.

8. Vorrichtung nach Anspruch 5, wobei die Note basierend auf dem Verhältnis zwischen der vom Fahrzeug verbrauchten Energie $W_{con}$ und dem Mindestwert aus von dem Fahrzeug an der Neigung aufgenommenen Energie $W_{gained}$ und der Bremsenergie $W_{brake}$ ermittelt wird.

9. Vorrichtung nach Anspruch 5, wobei der Ausgleichspunkt unter der Voraussetzung ermittelt wird, dass $W_{gained}$ in Abhängigkeit von einer bestimmten Höchstgeschwindigkeitsbegrenzung berechnet wird.

10. Vorrichtung nach Anspruch 9, wobei der Verhältniswert basierend auf dem Verhältnis zwischen der von dem Fahrzeug verbrauchten Energie $W_{con}$ und der von einem Fahrzeug oberhalb eines bestimmten Geschwindigkeitsschwellenwerts aufgenommenen Energie $W_{gained}$ ermittelt wird.

11. Vorrichtung nach einem der vorhergehenden Ansprüche, wobei die Einstufung in Abhängigkeit von dem Gewicht des Fahrzeugs ermittelt wird.

12. Vorrichtung nach einem der vorhergehenden Ansprüche, wobei der Ausglelchspunkt innerhalb eines vorbestimmten maximalen Abstands von $F_{res\leq0}$ ermittelt wird,

13. Vorrichtung nach Anspruch 1, wobei das Neigungsprofilmessmuttel eines oder viele aus der folgenden Gruppe umfasst: Beschleunigungsmesser, Druckmesser, Navigationssystem, wie GPS.

14. Vorrichtung nach Anspruch 1, wobei die Fahrwiderstandskraft $F_{res}$ in Abhängigkeit von diversen beeinflussenden Parametern berechnet wird, zum Beispiel von Rollwiderstand, Luftwiderstand und Gravitation.

15. Fahrzeug umfassend eine Neigungsfeedbackvorrichtung (18) nach einem der vorhergehenden Ansprüche 1-14.

**Revendications**

1. Dispositif de retour d'informations concernant une pente (18) permettant de déterminer et de présenter au conducteur d'un véhicule un retour d'informations, le dispositif comprenant :

une unité de détermination de pente (19) conçue pour déterminer un profil d'une pente sur laquelle roule le véhicule, sur la base de signaux de sortie provenant d'un moyen de détection de profil de pente,
un moyen de détection de conduite (20) pour détecter et calculer en continu l'activité de conduite d'un conducteur lorsqu'il roule sur une pente,
dispositif dans lequel ledit moyen de détection de conduite (20) calcule, en outre, en continu une force de résistance à l'avancement $F_{res}$, et dans lequel est déterminé un point de résistance à l'avancement spécifique $F_{res \leq 0}$, où ladite force de résistance à l'avancement $F_{res}$ est inférieure ou égale à zéro, le dispositif comprenant, en outre, un moyen de calcul de l'aptitude à la conduite (21), conçu pour faire correspondre l'activité de conduite audit profil de pente déterminé et pour générer une note dépendante de la manière dont l'activité de conduite coïncide avec une conduite optimale et ladite note étant ensuite présentée au conducteur du véhicule, **caractérisé en ce que** ladite unité de détermination de pente est conçue pour calculer, pour chaque $F_{res \leq 0}$, un point d'équilibre de pente $P_{bal}$ défini comme étant le point théorique auquel la commande d'accélération doit être relâchée afin d'équilibrer l'énergie consommée par le véhicule avant ledit $F_{res \leq 0}$, et l'énergie gagnée par le véhicule après ledit point, et pour déterminer une activité de conduite optimale en fonction de $P_{bal}$.

2. Dispositif selon la revendication 1, dans lequel ledit moyen de calcul de l'aptitude à la conduite classe ledit profil de pente déterminé dans l'une d'une pluralité de catégories de profils de pente, sur la base de règles de classification dépendantes de l'apparition/certaines caractéristiques du profil de pente déterminé et de la vitesse du véhicule, et dans lequel ladite note de conduite est déterminée sur la base de certaines règles de catégorie pour la catégorie du profil de pente déterminé.

3. Dispositif selon la revendication 1 ou 2, dans lequel certaines règles initiales déterminent si une classification du profil de pente déterminé est effectuée ou non, de préférence en fonction de la vitesse initiale $V_0$, d'une réduction abrupte de la vitesse, d'un freinage avant un virage raide, etc.

4. Dispositif selon la revendication 2, dans lequel ladite pluralité de catégories de profil de pente a une certaine priorité.

5. Dispositif selon la revendication 2, dans lequel ladite activité de conduite est calculée comme étant l'énergie consommée Wcon par le véhicule entre le point d'équilibre de pente $P_{bal}$ et le point $F_{res \leq 0}$ et, si le conducteur freine dans la descente, une énergie de freinage $W_{brake}$ étant l'énergie de freinage dégagée par le véhicule dans la descente.

6. Dispositif selon la revendication 1, dans lequel ledit point d'équilibre de pente $P_{bal}$ est calculé comme étant le point où l'énergie de freinage du véhicule résultant de la force de résistance à l'avancement Fres avant le point $F_{res \leq 0}$ est égale à l'énergie gagnée $W_{gained}$ par le véhicule dans la pente après le point $F_{res \leq 0}$.

7. Dispositif selon la revendication 5, dans lequel ladite note est déterminée sur la base de la relation entre l'énergie consommée $W_{con}$ par le véhicule et l'énergie $W_{gained}$ gagnée par le véhicule dans la pente.

8. Dispositif selon la revendication 5, dans lequel ladite note est déterminée sur la base de la relation entre l'énergie consommée $W_{con}$ par le véhicule, et la valeur minimum de l'énergie gagnée $W_{gained}$ par le véhicule dans la pente et de l'énergie de freinage $W_{brake}$.

9. Dispositif selon la revendication 5, dans lequel ledit point d'équilibrage est déterminé à la condition que $W_{gained}$ soit calculée en fonction d'une certaine restriction de vitesse maximum.

10. Dispositif selon la revendication 9, dans lequel ladite valeur de rapport est déterminée sur la base de la relation entre l'énergie consommée $W_{con}$ par le véhicule, et l'énergie gagnée $W_{gained}$ par un véhicule au-dessus d'un certain seuil de vitesse.

11. Dispositif selon l'une quelconque des revendications précédentes, dans lequel ladite note de conduite est déterminée en fonction du poids du véhicule.

**12.** Dispositif selon l'une quelconque des revendications précédentes, dans lequel ledit point d'équilibrage est déterminé à l'intérieur d'une distance maximale prédéterminée à partir dudit $F_{res \leq 0}$.

**13.** Dispositif selon la revendication 1, dans lequel ledit moyen de détection de profil de pente comprend un ou plusieurs du groupe :

accéléromètre, baromètre, système de navigation tel que GPS.

**14.** Dispositif selon la revendication 1, dans lequel ladite force de résistance à l'avancement Fres est calculée en fonction de divers paramètres d'influence, par ex. résistance au roulement, résistance à l'air et gravité.

**15.** Véhicule comprenant un dispositif de retour d'informations concernant une pente (18) selon l'une quelconque des revendications précédentes 1 à 14.

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007139491 A
- EP 1811481 A
- SE 06003701